# EUROPÄISCHE PATENTSCHRIFT

(11) **EP 3 623 088 B1**
(45) Veröffentlichungstag und Bekanntmachung des Hinweises auf die Patenterteilung: **02.03.2022**
(21) Anmeldenummer: 18194850.6
(22) Anmeldetag: 17.09.2018
(51) Int. Cl.: B23B 31/22, B23B 31/40, B25B 5/10, B25B 5/14

(54) **VORRICHTUNG ZUM SPANNEN VON WERKSTÜCKEN**
DEVICE FOR CLAMPING WORKPIECES
DISPOSITIF DE SERRAGE DES PIÈCES À USINER

(43) Veröffentlichungstag der Anmeldung: 18.03.2020
(73) Patentinhaber: Reis, Dieter, 61440 Oberursel (DE)
(72) Erfinder: Reis, Dieter, 61440 Oberursel (DE)
(74) Vertreter: Oppermann, Frank

(56) Entgegenhaltungen:
- EP-A1- 1 090 703
- DE-A1- 2 042 235
- DE-C1- 3 442 585
- FR-E- 56 076
- GB-A- 1 261 100
- US-A- 2 678 218
- US-A- 3 100 117
- US-A- 4 767 125

## Beschreibung

Die vorliegende Erfindung betrifft eine Vorrichtung zum Spannen von Werkstücken mit einem endseitigen Spannkörper an dem einen Ende und einem endseitigen Spannkörper an dem anderen Ende, und mit umfangsmäßig verteilt angeordneten Spannelementen, die federnd miteinander verbunden sind, wobei die Spannkörper Anlageflächen für die Spannelemente aufweisen, und die Spannkörper auf einer Längsachse gegeneinander verschiebbar sind, so dass die Spannelemente in radialer Richtung bewegbar sind.

Die DE-A-2 042 235 beschreibt ein Spannelement, das zur fluchtenden Ausrichtung der Bohrungen zweier Werkstücke bestimmt ist. Das bekannte Spannelement weist zwei fluchtend angeordnete Druckringe auf, die gegeneinander verschoben werden können. Zwischen den Druckringen sind Kugeln angeordnet, die rotationssymmetrisch um den Umfang des Spannelements verteilt und über Zugfedern verbunden sind. Die Kugeln grenzen an die beiden Druckringe an, wobei ein Druckring eine kegelförmige Auflagefläche aufweist. Werden die Druckringe gegeneinander verschoben, so werden die Kugeln entgegen der Kraft der Zugfedern in radialer Richtung nach außen bewegt und gegen die Innenwand der Bohrung des Werkstücks gedrückt.

Die DE 2 042 235 A1 beschreibt ein Spannelement mit zwei äußeren Druckringen und einem innenliegenden Spannkörper, der kegelförmige Auflageflächen für umfangsmäßig verteilt angeordnete Spannelementen aufweist. Die Spannplatten sind gegeneinander verschiebbar, so dass die Spannelemente in radialer Richtung bewegbar sind. Als Spannelemente werden Kugeln vorgeschlagen, die den Vorteil haben, dass auch bei einer von der exakten Kreisform im Querschnitt abweichenden Bohrung eine genaue Selbstzentrierung des Spannelements erfolgt.

Aus der EP 1 090 703 A1 ist eine Spannvorrichtung mit einem endseitigen Spannkörper an dem einen Ende und einem endseitigen Spannkörper an dem anderen Ende bekannt, wobei die beiden Spannkörper einander zugewandte Anlageflächen aufweisen, zwischen denen umfangsmäßig verteilt angeordnete Spannelemente vorgesehen sind. Die Anlageflächen weisen Führungsnuten auf, die derart ausgebildet sind, dass sich die Spannelemente in radialer Richtung bewegen, wenn die beiden Spannkörper gegeneinander verschoben werden. Die Spannvorrichtung erlaubt das Verspannen eines Werkstückes, das eine zylindrische Bohrung oder ein Sackloch aufweist. Der Innendurchmesser der Bohrung des Werkstücks muss dem Außendurchmesser der Spannvorrichtung entsprechen, so dass das Werkstück auf die Spannvorrichtung aufgeschoben und mit deren Spannelementen verspannt werden kann.

Die US 4 767 125 offenbart eine Spannvorrichtung mit den Merkmalen des Oberbegriffs des unabhängigen Anspruchs 1.

Die Spannvorrichtung hat sich in der Praxis bewährt. Nachteilig ist jedoch, dass die Spannvorrichtung konstruktionsbedingt nicht das sichere Spannen eines Werkstücks erlaubt, das eine Bohrung (Sackloch) aufweist, die mehrere Abschnitte mit einem unterschiedlichen Innendurchmesser hat, d. h. in der Bohrung (Sackloch) Stufen oder Absätze ausgebildet sind.

Der Erfindung liegt die Aufgabe zugrunde, eine universell einsetzbare Vorrichtung zum Spannen von Werkstücken zu schaffen. Die Aufgabe der Erfindung ist insbesondere eine Spannvorrichtung zu schaffen, die das sichere Spannen eines Werkstücks mit einer Bohrung (Sackloch), die eine oder mehrere Stufen oder Absätze aufweist, über die gesamte Länge erlaubt.

Die Lösung dieser Aufgabe erfolgt erfindungsgemäß mit den Merkmalen des Patentanspruchs 1. Die abhängigen Ansprüche betreffen vorteilhafte Ausführungsformen der Erfindung.

Die erfindungsgemäße Vorrichtung zum Spannen von Werkstücken umfasst eine Mehrzahl von unterschiedlichen Spannebenen, die von umfangsmäßig verteilt angeordneten Spannelementen gebildet werden. Unter einer Mehrzahl von unterschiedlichen Spannebenen werden mindestens zwei Spannebenen verstanden. Zwischen den endseitigen Spannkörpern ist mindestens ein innenliegender Spannkörper angeordnet, der gegenüber den endseitigen Spannkörpern auf der Längsachse der Spannvorrichtung verschiebbar ist. Der mindestens eine innenliegende Spannkörper weist an seinen Enden Anlageflächen für die Spannelemente auf. Die Spannelemente sind zwischen den einander zugewandten Anlageflächen benachbarter Spannkörper in mindestens zwei unterschiedlichen Spannebenen umfangsmäßig verteilt angeordnet. Eine Spannvorrichtung mit zwei Spannebenen beispielsweise weist einen innenliegenden Spannkörper auf, während beispielsweise eine Spannvorrichtung mit drei Spannebenen zwei innenliegende Spannkörper aufweist.

Zum Spannen des Werkstücks wird der axiale Abstand zwischen den Spannkörpern verringert, so dass der Abstand zwischen deren Anlageflächen kleiner wird, an denen die Spannelemente anliegen. Dadurch werden die Spannelemente radial nach außen gedrückt und können sich an die Wandung der Bohrung legen.

Die Spannelemente der einzelnen Spannebenen erlauben die sichere Befestigung auch langer Werkstücke, beispielsweise an einer Dreh- oder Fräsmaschine, um die Werkstücke maschinell bearbeiten zu können. Mit der erfindungsgemäßen Spannvorrichtung werden die Werkstücke in mehreren Spannebenen über die gesamte Länge sicher fixiert. Die Bohrung in den Werkstücken kann über einen oder mehrere Absätze verfügen, d. h. in Längsrichtung des Werkstücks unterschiedliche Innendurchmesser haben.

Die in unterschiedlichen Ebenen umfangsmäßig verteilt angeordneten Spannelemente bewegen sich beim Spannen solange in radialer Richtung nach außen bis die Spannelemente der jeweiligen Ebene an der Innenwand des Werkstücks anliegen. Die Spannvorrichtung erlaubt daher zunächst ein genaues Zentrieren des Werkstücks und dann ein verzugsfreies Spannen des Werkstücks.

Einer der beiden außenliegenden Spannkörper kann ein feststehender Spannkörper und der andere außenliegende Spannkörper ein beweglicher Spannkörper sein, so dass zum Spannen des Werkstücks durch Aufbringen einer Zug- oder Druckkraft der bewegliche Spannkörper auf den feststehenden Spannkörper gedrückt bzw. gezogen wird. Es ist aber auch möglich, dass beide Spannkörper auf einer gemeinsamen Achse verschiebbar sind, so dass eine Kraft zum Spannen von beiden Seiten aufgebracht werden kann. Für die Funktion der Spannvorrichtung ist unerheblich wie die Kraft auf den mindestens einen Spannkörper aufgebracht wird.

Die erfindungsgemäße Vorrichtung zum Spannen von Werkstücken hat weiterhin einen relativ einfachen Aufbau. Die Spannvorrichtung kann sich aus nur relativ wenigen Bauteilen zusammensetzten. Die Anzahl der Bauteile wird von der Anzahl der Spannebenen bestimmt.

Die Spannkörper können als Zylinder ausgebildet sein, so dass sich Werkstücke mit einer zylindrischen durchgehenden Bohrung oder einem zylindrischen Sackloch befestigen lassen. Es ist aber auch möglich, dass die Spannkörper eine Außenkontur mit mehreren Ecken haben, beispielsweise eine viereckige oder sechseckige Außenkontur, um Werkstücke mit einer entsprechenden Bohrung (Ausnehmung) befestigen zu können.

Eine bevorzugte Ausführungsform sieht einen zentralen Basiskörper vor, der von dem mindestens einen innenliegenden Spannkörper umschlossen wird. Auf dem zentralen Basiskörper ist der mindestens eine innenliegende Spannkörper längsverschiebbar geführt. Bei einer besonders bevorzugten Ausführungsform ist der mindestens eine innenliegende Spannkörper ein hohlzylindrischer Körper und der zentrale Basiskörper weist einen zylindrischen Abschnitt auf, auf dem der mindestens eine innenliegende Spannkörper längsverschiebbar geführt ist. Folglich wird der innenliegende Spannkörper zwischen den außenliegenden Spannkörpern sicher gehalten.

Eine weitere bevorzugte Ausführungsform sieht vor, dass zumindest einer der beiden endseitigen Spannkörper einen sich in den innenliegenden Spannkörper oder einen der innenliegenden Spannkörper erstreckenden Abschnitt aufweist. Bei einer Ausführungsform mit einem beweglichen und einem feststehenden Spannkörper weist der bewegliche Spannkörper den sich in den innenliegenden Spannkörper erstreckenden Abschnitt auf. Der endseitige Spannkörper ist vorzugsweise auf dem zentralen Basiskörper längsverschiebbar. Bei einer besonders bevorzugten Ausführungsform weist einer der beiden endseitigen Spannkörper einen hohlzylindrischen Abschnitt auf und der zentrale Basiskörper weist einen zylindrischen Abschnitt auf, auf dem der hohlzylindrische Abschnitt des endseitigen Spannkörpers längsverschiebbar ist.

Die Spannvorrichtung kann eine an einem der beiden endseitigen Spannkörper angreifende Zugstange aufweisen, um zum Spannen des Werkstücks eine Kraft auf den endseitigen Spannkörper aufbringen zu können. Der Basiskörper kann eine zentrale Bohrung aufweisen, durch die sich die Zugstange erstreckt. Die Zugstange kann von einem Antrieb der Werkzeugbearbeitungsmaschine betätigt werden. Wenn auf die Zugstange eine Zugkraft aufgebracht wird, drückt der bewegliche endseitige Spannkörper den mindestens einen innenliegenden Spannkörper auf den feststehenden endseitigen Spannkörper.

Eine alternative Ausführungsform sieht zum Spannen des Werkstücks anstelle einer Zugstange eine an einem der beiden endseitigen Spannkörper angreifende Spannschraube vor, die mit dem Basiskörper verschraubt ist. Bei dieser Ausführungsform wird das Werkstück durch Drehen der Spannschraube gespannt. Zum Aufbringen einer für das Spannen des Werkstücks ausreichenden Kraft braucht die Schraube nur von Hand festgezogen zu werden. Die Schaube kann aber auch von einem Betätigungsmechanismus gedreht werden.

Bei einer weiteren bevorzugten Ausführungsform weisen die Spannelemente eine Bohrung auf, durch die sich eine ringförmige Zugfeder erstreckt. Die Zugfeder hält die in einer Ebene umfangsmäßig verteilt angeordneten Spannelemente zusammen und hält die Spannelemente zwischen den Anlageflächen in einer vorgegebenen Position. Wenn die endseitigen Spannkörper gegeneinander bewegt werden, bestimmt die Zugkraft der Zugfeder die Bewegung der in einer Ebene umfangsmäßig verteilt angeordneten Spannelemente in radialer Richtung. Eine besonders bevorzugte Ausführungsform sieht daher vor, dass die Zugfedern, die sich durch in unterschiedlichen Spannebenen liegende Spannelemente erstrecken, unterschiedliche Zugkräfte haben. Wenn die endseitigen Spannkörper gegeneinander bewegt werden, führt eine geringere Zugkraft der Zugfeder dazu, das sich der mindestens eine innenliegenden Spannkörper, der schwimmend zwischen den endseitigen Spannkörpern gelagert ist, derart verschiebt, dass die von der Zugfeder mit der geringeren Zugkraft gehaltenen Spannelemente der einen Ebene sich eher radial nach außen bewegen als die von der Zugfeder mit der größeren Zugkraft gehaltenen Spannelemente der anderen Ebene. Folglich können sich die Spannelemente der unterschiedlichen Spannebenen nacheinander an die Wandung des Werkstücks anlegen bzw. leicht an die unterschiedlichen Innendurchmesser anpassen.

Die Zugkraft kann durch die Verwendung von Zugfedern mit unterschiedlichen Federlängen bzw. Durchmessern und/oder durch Verwendung unterschiedlicher Materialien für die Federn eingestellt werden. Eine Verkürzung der Feder beispielsweise führt zum Aufbringen einer höheren Vorspannung (Zugkraft).

Wenn sich eine ringförmige Zugfeder durch Bohrungen in den Spannelementen erstreckt, wird die federnde Verbindung zwischen den Spannelementen gleichmäßig belastet. Die Bohrung kann dabei einen größeren Durchmesser als die Zugfeder aufweisen, so dass die Spannelemente auf der Zugfeder verschiebbar sind. Die Bohrung kann allerdings auch derart dimensioniert sein, dass Spannelemente und Zugfeder kraftschlüssig miteinander verbunden und somit exakte Abstände zwischen den Kugeln vorgegeben sind.

An den Anlageflächen der Spannkörper sind den Spannelementen zugeordnete Führungsnuten vorgesehen. Die Führungsnuten sind derart ausgebildet, dass die Spannelemente in den Nuten radial nach außen bewegbar geführt sind. Diese Führung stellt sicher, dass die Spannelemente in eine definierte Position gelangen, in der sie an dem Werkstück anliegen. Die Führungsnuten verhindern ein Abrutschen oder Abrollen der Spannelemente in Umfangsrichtung.

Die Spannelemente haben einen Querschnitt mit mehreren Ecken, beispielsweise einen sechseckigen Querschnitt. Diese Spannelemente erlauben eine flächenförmige Anlage und sind insbesondere für bearbeitete Bohrungen (Sacklöcher) mit empfindlichen Oberflächen geeignet. Spannelemente mit mehreren Kanten, insbesondere Sechskant-Spannelemente sollten gehärtet sein und können im montierten Zustand mit einer Rundschleifmaschine auf den gewünschten Außendurchmesser geschliffen werden. Die Kontur der Führungsnuten sollte dem Querschnitt der Spannelemente entsprechen. Im Folgenden wird die Erfindung anhand von Ausführungsbeispielen unter Bezugnahme auf die beigefügten Figuren näher erläutert.

### Es zeigen:

Fig. 1 eine erste Vorrichtung zum Spannen in geschnittener Darstellung (manuelles Spannen von oben),
Fig. 2 eine Seitenansicht der ersten Spannvorrichtung,
Fig. 3 eine zweite Vorrichtung zum Spannen in geschnittener Darstellung (automatisches Spannen von unten),
Fig. 4 eine nicht erfindungsgemäße Konfiguration der Spannelemente, wobei die Spannelemente in runden Nuten geführt sind,
Fig. 5 eine zweite Anordnung der Spannelemente, wobei sie gemäß der Erfindung in rechteckigen Nuten geführt sind,
Fig. 6 ein erstes Werkstück, das mit einer erfindungsgemäßigen Spannvorrichtung gespannt werden kann, in geschnittener Darstellung,
Fig. 7 ein zweites Werkstück, das mit einer erfindungsgemäßigen Spannvorrichtung gespannt werden kann, in geschnittener Darstellung, und
Fig. 8 eine Vorrichtung zum Spannen zweier Werkstücke in geschnittener Darstellung.

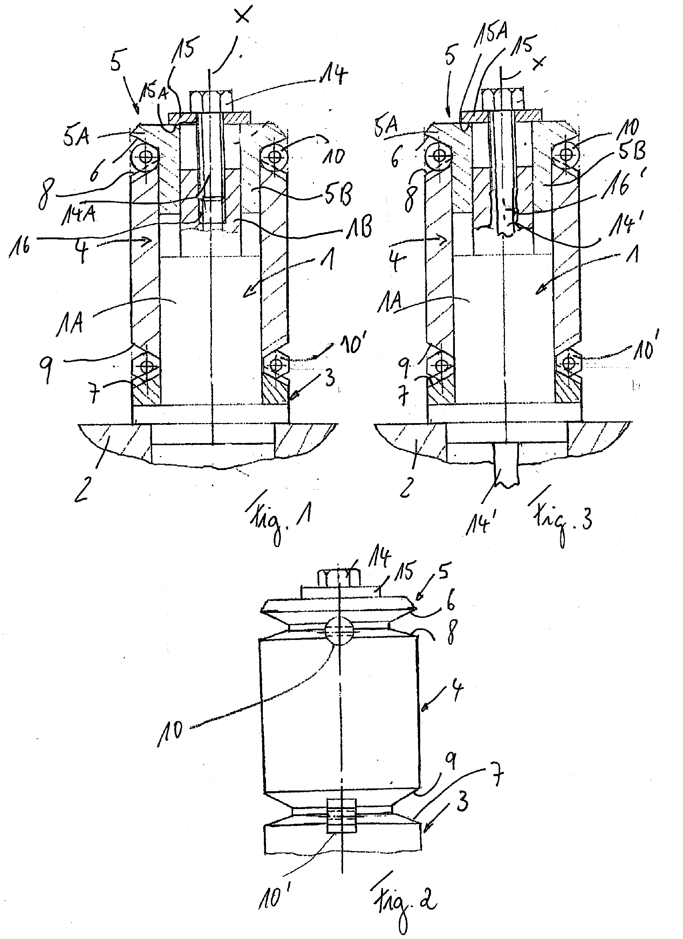

Fig. 1 zeigt einen Schnitt durch eine erste Vorrichtung zum Spannen eines Werkstücks. Aufgrund der kugelförmigen Spannelemente (10) fällt diese Spannvorrichtung nicht unter die Ansprüche.

Die Spannvorrichtung weist einen zentralen zylindrischen Basiskörper 1 auf, der einen in Fig. 1 unteren zylindrischen Abschnitt 1A mit einem größeren Außendurchmesser und einen oberen zylindrischen Abschnitt 1B mit einem kleineren Außendurchmesser hat. Der untere zylindrische Abschnitt 1A des zentralen Basiskörpers 1 ist fest mit einem in Fig. 1 nur andeutungsweise dargestellten Tisch 2 oder einer anderen Halterung einer Werkzeugbearbeitungsmaschine verbunden. Auf dem unteren zylindrischen Abschnitt 1A des zentralen Basiskörpers 1 sitzt ein in Fig. 1 unterer endseitiger Spannkörper 3. Der untere endseitige Spannkörper 3 ist fest mit dem zentralen Basiskörper 1 verbunden, kann aber auch einstückiger Bestandteil des zentralen Basiskörpers 1 sein.

Weiterhin weist die Spannvorrichtung einen innenliegenden Spannkörper 4 auf, der ein hohlzylindrischer Körper ist, dessen Außendurchmesser dem Außendurchmesser des unteren endseitigen Spannkörpers 3 und dessen Innendurchmesser dem Außendurchmesser des unteren Abschnitts 1A des zentralen Basiskörpers 1 entspricht, so dass der innenliegende Spannkörper 4 auf dem unteren Abschnitt 1A des Basiskörpers 1 entlang der Längsachse der Spannvorrichtung längsverschiebbar geführt ist.

Darüber hinaus weist die Spannvorrichtung einen in Fig. 1 oberen endseitigen Spannkörper 5 auf, der einen oberen ringförmigen Abschnitt 5A mit einem größeren Außendurchmesser und einen unteren hohlzylindrischen Abschnitt 5B mit einem kleineren Außendurchmesser hat. Der Außendurchmesser des oberen ringförmigen Abschnitts 5B entspricht dem Außendurchmesser des innenliegenden Spannkörpers 4, während der Außendurchmesser des unteren hohlzylindrischen Abschnitts 5B dem Innendurchmesser des innenliegenden Spannkörpers 4 und der Innendurchmesser des unteren hohlzylindrischen Abschnitts 5B dem Außendurchmesser des oberen zylindrischen Abschnitts 1B des Basiskörpers 1 entspricht, so dass der untere hohlzylindrische Abschnitt 5B des oberen endseitigen Spannkörpers 5 auf dem oberen zylindrischen Abschnitt 1B des Basiskörpers 1 längsverschiebbar geführt ist.

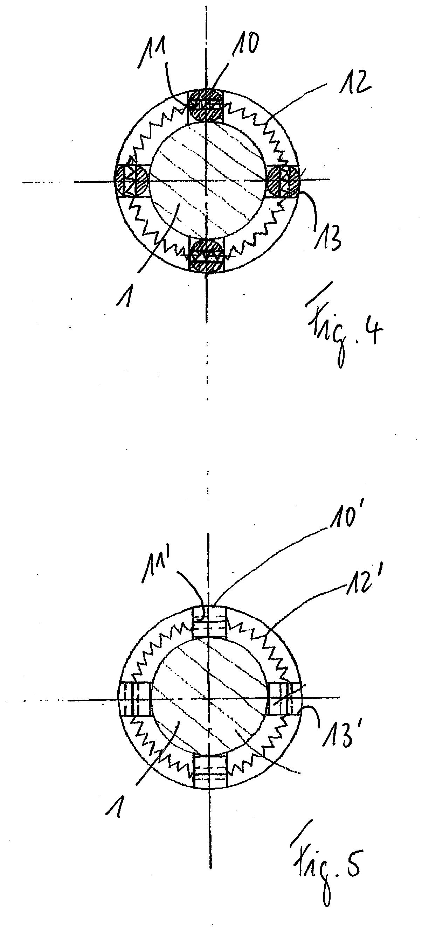

Der ringförmige Abschnitt 5A des oberen endseitigen Spannkörpers 5 weist eine Anlagefläche 6 und der untere endseitige Spannkörper 3 weist eine Anlagefläche 7 auf, die sich jeweils schräg nach außen erstrecken. Der innenliegende Spannkörper 4, der zwischen den endseitigen Spannkörpern 3, 5 schwimmend gelagert ist, weist an beiden Enden komplementäre Anlageflächen 8, 9 auf, die sich jeweils schräg nach außen erstrecken. Zwischen den einander gegenüberliegenden Anlageflächen 6, 8 des oberen endseitigen Spannkörpers 5 und des innenliegenden Spannkörpers 4 befinden sich umfangsmäßig verteilt angeordnete Spannelemente 10, die eine obere Spannebene bilden. Die oberen Spannelemente 10 sind bei dem vorliegenden Ausführungsbeispiel Kugeln, die jeweils eine Bohrung 11 aufweisen, durch die sich eine Zugfeder 12 erstreckt (Fig. 4). Die kugelförmigen Spannelemente 10 sitzen in radialen Nuten 13, die einen halbkreisförmigen Querschnitt haben (Fig. 2)

Zwischen den einander gegenüberliegenden Anlageflächen 7, 9 des unteren endseitigen Spannkörpers 3 und des innenliegenden Spannkörpers 4 befinden sich umfangsmäßig verteilt angeordnete Spannelemente 10', die eine untere Spannebene bilden. Die unteren Spannelemente 10' haben bei dem vorliegenden Ausführungsbeispiel einen sechskantförmigen Querschnitt und weisen jeweils eine Bohrung 11' auf, durch die sich eine Zugfeder 12' erstreckt (Fig. 5). Die sechskantförmigen Spannelemente 10' sitzen in radialen Nuten 13', die einen rechteckförmigen Querschnitt mit einem ebenen Nutgrund und seitlichen Flanken aufweisen (Fig. 2).

Bei der vorliegenden Spann vorrichtung sind in jeder Spannebene 4 Spannelemente 10, 10' umfangsmäßig verteilt angeordnet (Figuren 4 und 5).

Zum Spannen des Werkstücks weist die Spannvorrichtung eine Spannschraube 14 auf (Fig. 1). Der Schaft 14A der Spannschraube 14 erstreckt sich durch eine Bohrung 15A in einem scheibenförmigen Körper 15, der auf der Oberseite des ringförmigen Abschnitts 5B des oberen endseitigen Spannkörpers 5 aufliegt. Der Schraubenschaft 14A befindet sich in einer Bohrung 16 mit einem entsprechenden Innengewinde in dem oberen zylindrischen Abschnitt 1B des zentralen Basiskörpers 1. Durch Drehen der Spannschraube 14 wird der obere endseitige Spannkörper 5 auf den schwimmend gelagerten innenliegenden Spannkörper 4 gedrückt, wodurch der innenliegende Spannkörper 4 wiederum auf den unteren endseitigen Spannkörper 3 gedrückt wird. Dabei bewegen sich die in den Führungsnuten 13, 13' geführten Spannelemente 10, 10' der oberen und unteren Spannebene in radialer Richtung nach außen.

Fig. 3 zeigt eine alternative Spannvorrichtung, die aufgrund der kugelförmigen Spannelemente 10 nicht unter die Ansprüche fällt. Die Spannvorrichtung von Fig. 3 unterscheidet sich von der Spannvorrichtung von Fig. 1 nur dadurch, dass zum Spannen der Spannvorrichtung anstelle einer Spannschraube 14 eine Zugstange 14' vorgesehen ist, die sich durch eine Bohrung 16' in dem zentralen Basiskörper 1 erstreckt. Durch Ziehen an der Zugstange 14' wird der obere endseitige Spannkörper 5 auf den schwimmend gelagerten innenliegenden Spannkörper 4 gedrückt, wodurch der innenliegende Spannkörper 4 wiederum auf den unteren endseitigen Spannkörper 3 gedrückt wird.

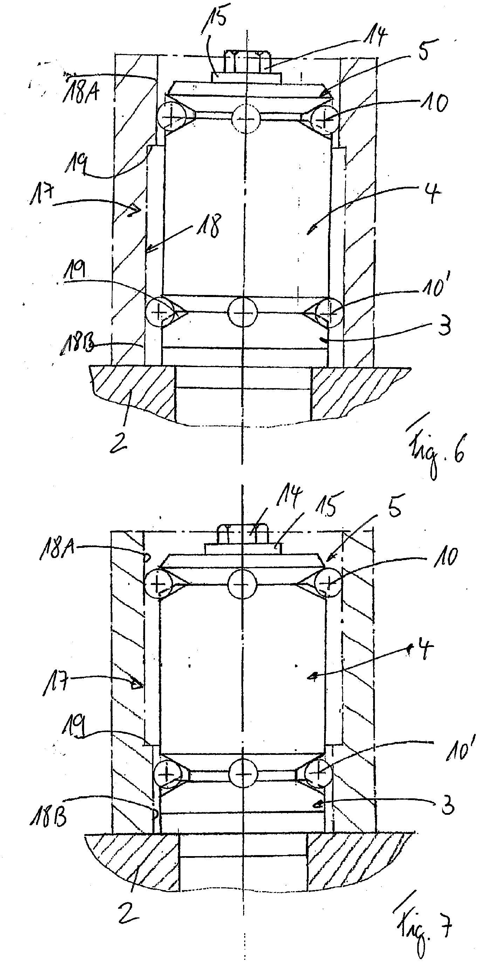

Die Figuren 6 und 7 zeigen die Spannvorrichtung von Fig. 1 und das zu spannende Werkstück 17.

Das Werkstück 17 weist eine zylindrische Bohrung 18 mit einem oberen und einem unteren Abschnitt 18A, 18B auf, die einen unterschiedlichen Innendurchmesser haben, so dass zwischen den beiden Abschnitten ein Absatz 19 oder eine Stufe ausgebildet ist. In Fig. 6 ist zu erkennen, dass die Spannelemente 10 der oberen Spannebene an der Wandung des oberen Abschnitts 18A der Bohrung 18 und die Spannelemente 10' der unteren Spannebene an der Wandung des unteren Abschnitts 18B der Bohrung 18 anliegen. Das Werkstück 18 wird von den Spannelementen 10, 10' der Spannvorrichtung in beiden Ebenen zentriert und fixiert. Durch Drehen der Spannschraube 14 kann die Spannkraft vergrößert bzw. verringert werden. Die erfindungsgemäße Spannvorrichtung erlaubt eine Fixierung des Werkstücks 17 auch dann, wenn die beiden Abschnitte 18A, 18B der Bohrung 18 unterschiedliche Innendurchmesser haben. Dabei ist unerheblich, auf welcher Seite der Abschnitt mit dem größeren Innendurchmesser liegt.

Fig. 6 zeigt ein Werkstück 17 mit einer Bohrung 18, deren oberer Abschnitt 18A einen kleineren Durchmesser als der untere Abschnitt 18B aufweist, während Fig. 7 ein Werkstück 17 mit einer Bohrung 18 zeigt, deren oberer Abschnitt 18A einen größeren Durchmesser als der untere Abschnitt 18B hat. Die einzelnen Spannelemente 3, 4, 5 stellen sich dem Durchmesser der zylindrischen Abschnitte entsprechend ein, so dass die zur Fixierung des Werkstücks 17 erforderliche Spannkraft aufgebracht werden kann.

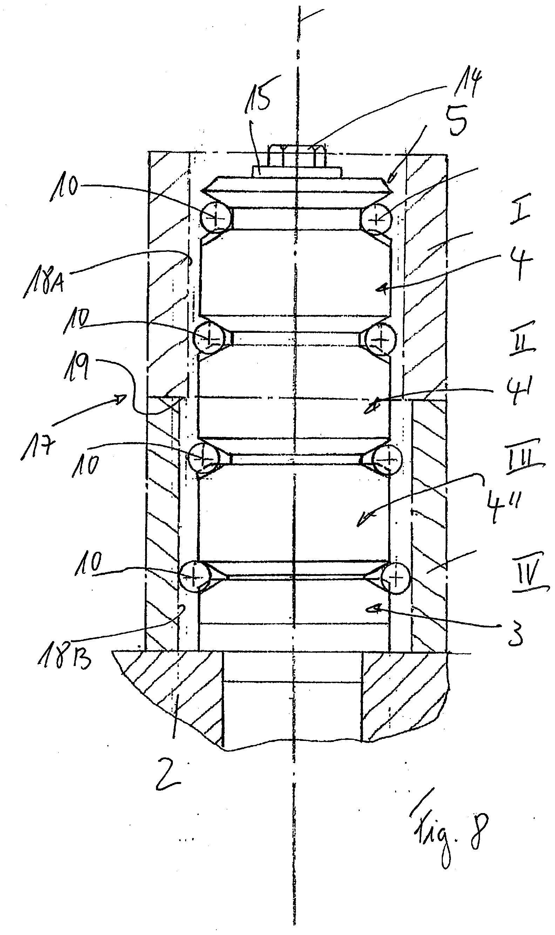

Fig. 8 zeigt eine alternative Spannvorrichtung, die aufgrund der kugelförmigen Spannelemente 10 nicht unter die Ansprüche, fällt. Die Spannvorrichtung von Fig. 8 unterscheidet sich von den oben erwähnten Spannvorrichtungen dadurch, dass mehr als zwei Spannebenen vorgesehen sind, die im Abstand zueinander angeordnet sind. Die einander entsprechenden Teile sind in den Figuren mit den gleichen Bezugszeichen versehen.

Die zusätzlichen Spannebenen werden dadurch geschaffen, dass für jede weitere Spannebene ein weiterer innenliegender Spannkörper 4', 4" vorgesehen ist. Die vorliegende Ausführungsform verfügt über vier Spannebenen. Folglich weist die Ausführungsform zwei zusätzliche Spannebenen auf, wozu zwei weitere Spannkörper 4', 4" erforderlich sind. Bei der Spannvorrichtung von Fig. 8 sind die Spannelemente 10 sämtlicher Spannebenen kugelförmige Spannelemente. Die Spannvorrichtung erlaubt die sichere Fixierung eines Werkstücks 17 mit einer größeren Länge bzw. Bauhöhe wie die Spannvorrichtung mit nur zwei Spannebenen (Figuren 1 bis 7).

Die beiden oberen Spannebenen (Spannebene I und II) liegen innerhalb des oberen Abschnitts 18A der Bohrung 18 des Werkstücks 17, der bei der vorliegenden Spannvorrichtung einen kleineren Innendurchmesser hat, während die beiden unteren Spannebenen (Spannebene III und IV) innerhalb des unteren Abschnitts 18B der Bohrung 18 des Werkstücks 17 liegen, der einen größeren Innendurchmesser hat. Das Werkstück 17 kann beispielsweise ein rotationssymmetrischer Körper sein, der aus zwei miteinander verschweißen Rohrstücken besteht.

Die Zugfedern 12, mit denen die Spannelemente 10 einer Spannebene miteinander verbunden sind, unterscheiden sich in der Zugkraft. Bei dem vorliegenden Ausführungsbeispiel nimmt die Zugkraft der Zugfeder von der in Fig. 8 obersten Spannebene zu der untersten Spannebene kontinuierlich ab, d. h. die Zugfeder der Spannelemente 10 der obersten Spannebene (Spannebene I) hat die größte Zugkraft und die Zugfeder der untersten Spannebene (Spannebene IV) hat die kleinste Zugkraft.

Fig. 8 zeigt den Vorgang des Spannens durch Drehen der Spannschraube 14. Es zeigt sich, dass aufgrund der geringeren Zugkraft der Zugfeder 12 der untersten Spannebene (Spannebene IV) deren Spannelemente 10 am weitesten radial nach außen gedrückt werden, während die Spannelemente 10 der obersten Spannebene (Spannebene I) aufgrund der größeren Zugkraft der Zugfeder 12 am geringsten radial nach außen gedrückt werden. Die Spannelemente 10 der dazwischen liegenden Spannebenen (Spannebenen II und III) werden entsprechend der jeweiligen Zugkraft nach außen gedrückt. Folglich bestimmt die Zugkraft der Zugfedern 12 die radiale Aufweitung der Spannelemente in dem zu verspannenden Werkstück 17.

Wenn das Werkstück 17 beispielsweise in dem oberen Abschnitt 18A einen kleineren Durchmesser haben sollte als in dem unteren Abschnitt 18B, sollte die Zugkraft der Zugfedern 12 von oben nach unten zunehmen, so dass die Spannelemente der obersten Spannebene (Spannebene I) beim Drehen der Spannschraube 14 am weitesten radial nach außen gedrückt werden.

Bei der oben erwähnten Spannvorrichtung können die Spannelemente 10 mit den Zugfedern 12 leicht ausgewechselt werden, um die Spannvorrichtung an das Werkstück 17 anzupassen. Hierzu ist es lediglich erforderlich, die Spannschraube 14 zu lösen und den oberen endseitigen Spannkörper 5 und dann den oder die innenliegenden Spannkörper 4, 4', 4" der Reihe nach abzunehmen. Die Zugfedern 12 mit den Spannelementen 10 (Spannringe) lassen sich dann leicht abziehen und gegen Spannringe mit einer anderen Federkennlinie austauschen.

## Patentansprüche

1. Vorrichtung zum Spannen von Werkstücken mit einem endseitigen Spannkörper (3) an dem einen Ende und einem endseitigen Spannkörper (5) an dem anderen Ende, und mit umfangsmäßig verteilt angeordneten Spannelementen (10'), die federnd miteinander verbunden sind, wobei die Spannkörper (3, 5 Anlageflächen (6, 7) für die Spannelemente (10') aufweisen, und die Spannkörper (3, 5) auf einer Längsachse (X) gegeneinander verschiebbar sind, so dass die Spannelemente in radialer Richtung bewegbar sind, wobei zwischen den endseitigen Spannkörpern (3, 5) mindestens ein innenliegender Spannkörper (4) angeordnet ist, der gegenüber den endseitigen Spannkörpern (3, 5) auf der Längsachse (X) verschiebbar ist, und der mindestens eine innenliegende Spannkörper (4) an den Enden Anlageflächen (8, 9) für die Spannelemente (10') aufweist, wobei die Spannelemente (10') zwischen den einander zugewandten Anlageflächen (6, 7, 8, 9) benachbarter Spannkörper (3, 4, 5) in mindestens zwei unterschiedlichen Spannebenen umfangsmäßig verteilt angeordnet sind, wobei die Spannelemente (10') einen mehrkantförmigen Querschnitt haben, **dadurch gekennzeichnet, dass** an den Anlageflächen (6, 7, 8, 9) der Spannkörper (3, 4, 5) den Spannelementen (10') zugeordnete radiale Führungsnuten (13') mit einem rechteckförmigen Querschnitt und einem ebenen Nutgrund und seitlichen Flanken vorgesehen sind, in denen die Spannelemente (10') radial nach außen bewegbar geführt sind.

2. Vorrichtung zum Spannen von Werkstücken nach Anspruch 1, **dadurch gekennzeichnet, dass** die Vorrichtung zum Spannen einen zentralen Basiskörper (1) aufweist, der von dem mindestens einen innenliegenden Spannkörper (4) umschlossen wird.

3. Vorrichtung zum Spannen von Werkstücken nach Anspruch 2, **dadurch gekennzeichnet, dass** der mindestens eine innenliegende Spannkörper (4) ein hohlzylindrischer Körper ist und der zentrale Basiskörper (1) einen zylindrischen Abschnitt (1A) aufweist, auf dem der mindestens eine innenliegende Spannkörper (4) längsverschiebbar geführt ist.

4. Vorrichtung zum Spannen von Werkstücken nach einem der Ansprüche 1 bis 3, **dadurch gekennzeichnet, dass** einer der beiden endseitigen Spannkörper (5) einen sich in den innenliegenden Spannkörper (4) oder einen der innenliegenden Spannkörper erstreckenden Abschnitt (5B) aufweist.

5. Vorrichtung zum Spannen von Werkstücken nach Anspruch 2 oder 3, **dadurch gekennzeichnet, dass** einer der beiden endseitigen Spannkörper (5) auf dem zentralen Basiskörper (1) längsverschiebbar ist.

6. Vorrichtung zum Spannen von Werkstücken nach einem der Ansprüche 2 bis 5, **dadurch gekennzeichnet, dass** einer der beiden endseitigen Spannkörper (5) einen hohlzylindrischen Abschnitt (5B) aufweist und der zentrale Basiskörper (1) einen zylindrischen Abschnitt (1B) aufweist, auf dem der hohlzylindrische Abschnitt (5B) des endseitigen Spannkörpers (5) längsverschiebbar ist.

7. Vorrichtung zum Spannen von Werkstücken nach einem der Ansprüche 2 bis 6, **dadurch gekennzeichnet, dass** die Vorrichtung zum Spannen eine an einem der beiden endseitigen Spannkörper (5) angreifende Zugstange (14') aufweist, und der Basiskörper (1) eine zentrale Bohrung (16) aufweist, durch die sich die Zugstange (14') erstreckt.

8. Vorrichtung zum Spannen von Werkstücken nach einem der Ansprüche 2 bis 6, **dadurch gekennzeichnet, dass** die Vorrichtung zum Spannen eine an einem der beiden endseitigen Spannkörper (5) angreifende Spannschraube (14) aufweist, die mit dem Basiskörper (1) verschraubt ist.

9. Vorrichtung zum Spannen von Werkstücken nach einem der Ansprüche 1 bis 7, **dadurch gekennzeichnet, dass** die Spannelemente (10') eine Bohrung (11') aufweisen, durch die sich eine ringförmige Zugfeder (12') erstreckt.

10. Vorrichtung zum Spannen von Werkstücken nach einem der Ansprüche 1 bis 9, **dadurch gekennzeichnet, dass** die Zugfedern (12'), , die sich durch in unterschiedlichen Spannebenen liegende Spannelemente (10') erstrecken, unterschiedliche Zugkräfte haben.

11. Vorrichtung zum Spannen von Werkstücken nach einem der Ansprüche 1 bis 10, **dadurch gekennzeichnet, dass** die Spannelemente (10') einen sechskantförmigen, Querschnitt haben.

12. Vorrichtung zum Spannen von Werkstücken nach einem der Ansprüche 1 bis 11, **dadurch gekennzeichnet, dass** in einer Spannebene 3 bis 8 Spannelemente (10') umfangsmäßig verteilt angeordnet sind.

## Claims

1. Device for clamping workpieces, having a clamping body (3) at one end and a clamping body (5) at the other end, and having clamping elements (10') which are arranged so as to be distributed circumferentially and which are resiliently interconnected, the clamping bodies (3, 5) having contact surfaces (6, 7) for the clamping elements (10'), and it being possible for the clamping bodies (3, 5) to be displaced on a longitudinal axis (X) relative to one another such that the clamping elements can be moved in the radial direction, at least one internal clamping body (4) being arranged between the end clamping bodies (3, 5), which internal clamping body can be displaced on the longitudinal axis (X) relative to the end clamping bodies (3, 5), and the at least one internal clamping body (4) having, at the ends thereof, contact surfaces (8, 9) for the clamping elements (10'), the clamping elements (10') between the mutually facing contact surfaces (6, 7, 8, 9) of adjacent clamping bodies (3, 4, 5) being arranged so as to be distributed circumferentially in at least two different clamping planes, and the clamping elements (10') having a polygonal cross section, **characterised in that** radial guide grooves (13') are provided on the contact surfaces (6, 7, 8, 9) of the clamping bodies (3, 4, 5), which grooves are assigned to the clamping elements (10') and have a rectangular cross section, a flat groove base and lateral flanks, and in which grooves the clamping elements (10') are guided so as to be radially outwardly movable.

2. Device for clamping workpieces according to claim 1, **characterised in that** the device for clamping has a central base body (1) which is enclosed by the at least one internal clamping body (4).

3. Device for clamping workpieces according to claim 2, **characterised in that** the at least one internal clamping body (4) is a hollow cylindrical body, and the central base body (1) has a cylindrical portion (1A) on which the at least one internal clamping body (4) is guided so as to be longitudinally displaceable.

4. Device for clamping workpieces according to any of claims 1 to 3, **characterised in that** one of the two end clamping bodies (5) has a portion (5B) that extends into the inner clamping body (4) or into one of the inner clamping bodies.

5. Device for clamping workpieces according to either claim 2 or claim 3, **characterised in that** one of the two end clamping bodies (5) is longitudinally displaceable on the central base body (1).

6. Device for clamping workpieces according to any of claims 2 to 5, **characterised in that** one of the two end clamping bodies (5) has a hollow cylindrical portion (5B), and the central base body (1) has a cylindrical portion (1B) on which the hollow cylindrical portion (5B) of the end clamping body (5) is longitudinally displaceable.

7. Device for clamping workpieces according to any of claims 2 to 6, **characterised in that** the device for clamping has a connecting rod (14') which acts on one of the two end clamping bodies (5), and the base body (1) has a central bore (16) through which the connecting rod (14') extends.

8. Device for clamping workpieces according to any of claims 2 to 6, **characterised in that** the device for clamping has a clamping screw (14) which acts on one of the two end clamping bodies (5) and is screwed to the base body (1).

9. Device for clamping workpieces according to any of claims 1 to 7, **characterised in that** the clamping elements (10') have a bore (11') through which an annular tension spring (12') extends.

10. Device for clamping workpieces according to any of claims 1 to 9, **characterised in that** the tension springs (12'), which extend through clamping elements (10') located in different clamping planes, have different tensile forces.

11. Device for clamping workpieces according to any of claims 1 to 10, **characterised in that** the clamping elements (10') have a hexagonal cross section.

12. Device for clamping workpieces according to any of claims 1 to 11, **characterised in that** 3 to 8 clamping elements (10') are arranged so as to be distributed circumferentially in a clamping plane.

## Revendications

1. Dispositif de serrage de pièces à usiner avec un corps de serrage (3) côté extrémité au niveau de l'une extrémité et un corps de serrage (5) côté extrémité au niveau de l'autre extrémité, et avec des éléments de serrage (10') agencés de manière répartie sur la périphérie qui sont reliés de manière élastique entre eux, dans lequel les corps de serrage (3, 5) présentent des surfaces d'appui (6, 7) pour les éléments de serrage (10'), et les corps de serrage (3, 5) sont coulissants l'un contre l'autre sur un axe longitudinal (X) de sorte que les éléments de serrage soient mobiles dans le sens radial, dans lequel au moins un corps de serrage (4) intérieur est agencé entre les corps de serrage (3, 5) côté extrémité, lequel est coulissant par rapport aux corps de serrage (3, 5) côté extrémité sur l'axe longitudinal (X), et l'au moins un corps de serrage (4) intérieur présente au niveau des extrémités des surfaces d'appui (8, 9) pour les éléments de serrage (10'), dans lequel les éléments de serrage (10') sont agencés de manière répartie sur la périphérie entre les surfaces d'appui (6, 7, 8, 9) tournées les unes vers les autres de corps de serrage (3, 4, 5) contigus dans au moins deux plans de serrage différents, dans lequel les éléments de serrage (10') présentent une section transversale polygonale, **caractérisé en ce que**
des rainures de guidage (13') radiales associées aux éléments de serrage (10') avec une section transversale rectangulaire et un fond de rainure plan et des flancs latéraux sont prévues au niveau des surfaces d'appui (6, 7, 8, 9) des corps de serrage (3, 4, 5), dans lesquelles les éléments de serrage (10') sont guidés de manière mobile radialement vers l'extérieur.

2. Dispositif de serrage de pièces à usiner selon la revendication 1, **caractérisé en ce que** le dispositif de serrage présente un corps de base (1) central qui est entouré par l'au moins un corps de serrage (4) intérieur.

3. Dispositif de serrage de pièces à usiner selon la revendication 2, **caractérisé en ce que** l'au moins un corps de serrage (4) intérieur est un corps cylindrique creux et le corps de base (1) central présente une section (1A) cylindrique, sur laquelle l'au moins un corps de serrage (4) intérieur est guidé de manière coulissante longitudinalement.

4. Dispositif de serrage de pièces à usiner selon l'une quelconque des revendications 1 à 3, **caractérisé en ce qu'**un des deux corps de serrage (5) côté extrémité présente une section (5B) s'étendant dans le corps de serrage (4) intérieur ou un des corps de serrage intérieurs.

5. Dispositif de serrage de pièces à usiner selon la revendication 2 ou 3, **caractérisé en ce qu'**un des deux corps de serrage (5) côté extrémité est coulissant longitudinalement sur le corps de base (1) central.

6. Dispositif de serrage de pièces à usiner selon l'une quelconque des revendications 2 à 5, **caractérisé en ce qu'**un des deux corps de serrage (5) côté extrémité présente une section (5B) cylindrique creuse et le corps de base (1) central présente une section (1B) cylindrique, sur laquelle la section (5B) cylindrique creuse du corps de serrage (5) côté extrémité est coulissante longitudinalement.

7. Dispositif de serrage de pièces à usiner selon l'une quelconque des revendications 2 à 6, **caractérisé en ce que** le dispositif de serrage présente une tige de traction (14') agissant sur un des deux corps de serrage (5) côté extrémité, et le corps de base (1) présente un perçage central (16), à travers lequel la tige de traction (14') s'étend.

8. Dispositif de serrage de pièces à usiner selon l'une quelconque des revendications 2 à 6, **caractérisé en ce que** le dispositif de serrage présente une vis de serrage (14) agissant sur un des deux corps de serrage (5) côté extrémité qui est vissée au corps de base (1).

9. Dispositif de serrage de pièces à usiner selon l'une quelconque des revendications 1 à 7, **caractérisé en ce que** les éléments de serrage (10') présentent un perçage (11'), à travers lequel un ressort de traction (12') annulaire s'étend.

10. Dispositif de serrage de pièces à usiner selon l'une quelconque des revendications 1 à 9, **caractérisé en ce que** les ressorts de traction (12') qui s'étendent à travers des éléments de serrage (10') se trouvant dans différents plans de serrage, présentent différentes forces de traction.

11. Dispositif de serrage de pièces à usiner selon l'une quelconque des revendications 1 à 10, **caractérisé en ce que** les éléments de serrage (10') présentent une section transversale hexagonale.

12. Dispositif de serrage de pièces à usiner selon l'une quelconque des revendications 1 à 11, **caractérisé en ce que** 3 à 8 éléments de serrage (10') sont agencés de manière répartie sur la périphérie dans un plan de serrage.
